# EUROPÄISCHE PATENTSCHRIFT

(11) **EP 2 420 337 B1**
(45) Veröffentlichungstag und Bekanntmachung des Hinweises auf die Patenterteilung: **14.10.2015**
(21) Anmeldenummer: 11186722.2
(22) Anmeldetag: 05.03.2004
(51) Int. Cl.: B23C 5/20, B23C 5/22, B23B 51/10, B23B 27/16

(54) **Verwendung einer Wendeplatte zum Fasen, und Zusammenstellung eines konischen oder zylindrischen Fräskopfs und einer Wendeplatte zum Fasen**
Use of an indexable tip for bevelling, and combination of a conical or cylindrical milling head with an indexable tip for bevelling
Plaquette réversible servant à chanfreiner, et combinaison d'une tête de fraisage conique ou cylindrique et d'une plaquette réversible servant à chanfreiner

(30) Priorität: 06.03.2003 DE 10310098; 05.05.2003 DE 10320173
(43) Veröffentlichungstag der Anmeldung: 22.02.2012
(62) Teilanmeldung aus: 04717548.4
(73) Patentinhaber: Rieth, Stephan, 66606 St. Wendel (DE)
(72) Erfinder: Rieth, Stephan, 66606 St. Wendel (DE)
(74) Vertreter: Bernhardt, Reinhold

(56) Entgegenhaltungen:
- EP-A- 0 175 053
- EP-A1- 0 213 494
- DE-C1- 3 730 943
- JP-A- 7 299 633
- JP-A- 2003 011 017
- US-A- 3 701 187
- US-A- 4 729 697
- US-A1- 2002 189 414
- AB Sandvik Coromant: "Rotating Tools 2001", 1. Februar 2001 (2001-02-01), Elanders, Sweden, XP002666735, Seite A 120, * Seite A 120 * * *

## Beschreibung

Die Erfindung betrifft die Verwendung einer zum Fasen mittels eines konischen oder zylinderischen Fräskopfs geeigneten Wendeplatte zur Verrundung von Kanten gemäß dem Oberbegriff des Anspruchs 1.

Die Erfindung betrifft eine Zusammenstellung eines konischen oder zylindrischen Fräskopfes und einer Wendeplatte zum Fasen gemäß dem Oberbegriff des Anspruchs 2, wobei die Wendeplatte mit geschliffenen Schneidkanten und einer Bohrung von der Freifläche zur Auflagefläche der Wendeplatte für den Durchtritt eines einen Kopf aufweisenden Befestigungsmittels versehen ist und eine Wendemöglichkeit durch Verdrehen der Wendeplatte um die Achse der Bohrung vorgesehen ist, wobei die Wendeplatte an der Freifläche eingeformte flache Mulden aufweist, die in Spanflächen der Wendeplatte ausmünden.

Eine solche Verwendung und eine solche Zusammenstellung sind aus der US 3,701,187 A bekannt.

Eine in der DE 37 30 943 C1 beschriebene Wendeplatte der eingangs genannten Art ist mit Spanteilernuten versehen, mittels derer die Spanbreite in schmale, enggerollte Spanlocken aufgeteilt wird, um die Austragung der Späne aus einem zu verwendenden Fräswerkzeug zu erleichtern. Um eine Überlappung der Spannuten jeweils aufeinanderfolgender Wendeplatten auf dem Fräswerkzeug zu erreichen, werden die Wendeplatten im Wechsel seitenverkehrt auf dem Fräswerkzeug eingesetzt.

Eine weitere solche Wendeplatte Art geht aus der US 3,701,187 hervor, die einen Fräser beschreibt, auf dem in Drehrichtung gesehen versetzt zueinander mehrere der Wendeplatten angeordnet sind.

Weitere Wendeplatten für Fräswerkzeuge, bei denen in Spanflächen der Wendeplatten ausmündende Mulden vorgesehen sind, sind aus der EP 0 213 494 A1, der US 4,729,697, der JP 7299633 sowie aus dem Katalog AB Sandvic Coromant Rotating Tools 2001 ", 1.2.2001, Elanders, Schweden, Seite A120 bekannt.

Die US 2002/0189414 A1 beschreibt eine Wendeplatte für ein Drehwerkzeug, die mit elliptisch geformten Schnittkanälen versehen ist, welche in Spanflächen der Wendeplatte ausmünden. Eine Bohrung für ein Befestigungsmittel ist durch die beiden Seiten der Wendplatte geführt, an denen die Spanflächen gebildet sind.

Ferner ist durch Benutzung eine Wendeplatte bekannt, bei der nur etwa 6,5 mm Breite zwischen ihren beiden Schneidkanten und 5 mm Breite der Auflagefläche und weniger als 3 mm Dicke eine längliche Form mit trapezförmigem Querschnitt und kann in verhältnismäßig großer Zahl auf dem konischen Fräskopf angeordnet werden. Auf dem Umfang eines konischen Fräskopfs beispielsweise, der einen kleinsten Durchmesser von 25 mm und einen Konuswinkel zwischen 10 und 170° hat, finden am kleinsten Umfang acht Wendeplatten Platz. Dazu trägt neben der geringen Breite die stehende Anordnung der Wendeplatten bei, da sie keinen Freiraum in Umfangsrichtung für das Ansetzen des Befestigungswerkzeugs, in der Regel eines Schraubendrehers, verlangt. Die geschliffenen und daher im Vergleich mit nur gesinterten Wendeplatten präzisen und scharfen Kanten ermöglichen eine hohe Schnittgeschwindigkeit bei geringer Kraftausübung. Die Anordnung auf dem Schneidkopf mit geringem Radius lässt darüber hinaus nur ein kleines Drehmoment entstehen, dem leicht gegengehalten werden kann, so dass eine leichte Ausführung der Maschine einschließlich einer nur leichten Einspannung des Werkstücks möglich ist und die Anordnung auch für eine mobile Handfräsmaschine geeignet ist.

Der Erfindung liegt die Aufgabe zugrunde, die Möglichkeiten zur Bearbeitung von Werkstücken mittels Fräswerkzeugen zu erweitern.

Erfindungsgemäß wird diese Aufgabe dadurch gelöst, dass die Mulden in der Freifläche in einer derartigen Form gebildet sind, dass Ausmündungen der Mulden in den Spanflächen eingebuchtete Schneidkanten erzeugen, und die Wendeplatte auf einer Sitzfläche des Fräskopfs angeordnet ist derart, dass bei Betrieb des Fräskopfs nur durch Schneiden mit einer der eingebuchteten Schneidkanten Kanten eines Werkstücks verrundbar sind.

In einer Ausgestaltung der Erfindung wird die Zusammenstellung zum Einarbeiten von Schweißfasen und optischen Fasen verwendet.

Zweckmäßigerweise ist die Zusammenstellung zum Einarbeiten von den Schweißfasen, den optischen Fasen und der Kantenverrundungen an gerade verlaufenden Kanten und Konturen von Werkstücken aus Aluminium (legierungen), Stahl und anderen höherfesten Werkstoffen vorgesehen.

Die Wendemöglichkeit durch Umkehren bedeutet, dass sich die Wendeplatte zur Bildung von mindestens zwei weiteren Schneidkanten von ihrer Dickenmitte aus zur Auflagefläche hin wieder verbreitert. Mit der Gewinnung der weiteren Schneidkanten, die die Lebensdauer entsprechend erhöhen, ist daher auch ein besserer Sitz der Wendeplatte auf dem Fräskopf verbunden, wodurch eine größere Laufruhe und damit Präzision der Bearbeitung erreicht wird. Dazu trägt auch die infolge der Verbreiterung der Platte insgesamt ermöglichte Vergrößerung der Bohrung und Befestigung mittels einer stärkeren Schraube o. dgl. bei. Die breitere Platte hat im übrigen größere Festigkeit. Da die Platte dank ihrer breiteren Auflagefläche und anderen Querschnittsform aber auch dicker als nach dem Stand der Technik bemessen werden kann, hat man ferner eine große Freiheit, bei gleichbleibender Breite der Platte unter Veränderung ihrer Dicke den Keilwinkel je nach dem zu bearbeitenden Material zu variieren und einen günstigen Spanwinkel sowie einen geeigneten Freiwinkel einzurichten; trotz der verringerten Zahl der Wendeplatten kann so die Abtragsleistung sogar gesteigert werden. Darüber hinaus werden an den doppelten, zueinander gewinkelten Spanflächen die Späne besser abgeführt.

Die beiden genannten Flächen werden in der Regel eine Breite von mindestens 5,5 mm, vorzugsweise von 6 bis 12 mm haben.

Die Dicke der Schneidplatte mag normalerweise 4 bis 10 mm betragen.

Der Keilwinkel von an ebenen Spanflächen gebildeten Schneidkanten beträgt vorzugsweise 40 bis 75°: Der Keilwinkel von an konkaven Spanflächen gebildeten Schneidkanten beträgt vorzugsweise 10 bis 60°.

Die Anordnung auf entsprechenden Sitzflächen eines den Wendeplatten zugeordneten Fräskopfes soll bevorzugt einen wirksamen Spanwinkel von bei ebenen Spanflächen 6 bis 47° und bei konkaven Spanflächen 15 bis 75° und einen Freiwinkel von 2 bis 25° ergeben.

Vorzugsweise und in der Regel weist die Wendeplatte an denjenigen Seiten, die die möglichen Spanflächen aufweisen, eine die betreffenden beiden Spanflächen bildende Einkehlung auf, die, abgesehen von etwaigen Ein- und/oder Ausbiegungen ihrer die Schneidkanten bildenden Ränder, einen durchgehend gleichbleibenden und zu der die Bohrung schneidenden Mittelebene der Wendeplatte spiegelbildlichen Querschnitt hat.

Hier kann das Schleifen, ggf. auch ein Nachschleifen, der beiden Spanflächen sehr einfach in einem Arbeitsgang vorgenommen werden im Gegensatz zu den zahlreichen in anderem Zusammenhang bekannten Gestaltungen von Wendeplatten, bei denen die beiden Spanflächen etwas gegeneinander winkelversetzt sind.

In der Regel werden die betreffenden beiden Spanflächen eben sein und vorzugsweise in einem Winkel von 80 bis 160° zueinander stehen.

Die beiden Spanflächen können aber auch entsprechend einer Einkehlung runden Querschnitts konkav sein. Diese Gestaltung erlaubt einen scharfen Keilwinkel.

An den ebenen Spanflächen kann der Keilwinkel schärfer gestaltet werden durch eine schmale Kehlnut unter der Schneidkante in der Spanfläche.

In besonderen Fällen kann auch an den Spanflächen und/oder den Freiflächen eine schmale Fase geschliffen werden, um einen stumpferen Keilwinkel zu erzeugen.

Zum Zweck einer weiteren Erhöhung ihrer Lebensdauer kann die Wendeplatte zufolge einer die beiden erstgenannten Flächen über den Kopf des vorgesehenen Befestigungsmittels anhebenden Dickenzugabe, mit der die Dicke der Wendeplatte die Tiefe des vorgesehenen Sitzes der Wendeplatte an dem Fräskopf übersteigt, zur Schärfung der Schneidkanten nachschleifbar sein.

In einer ersten Variante ist diese Wendeplatte an den erstgenannten Flächen sowie an den Spanflächen nachschleifbar. Eine der jeweils benutzten Spanfläche an der Freifläche gegenüberliegende mögliche Spanfläche ist zur alleinigen Abstützung der Wendeplatte gegen die Schneidkraft an einer, vorzugsweise gleich ausgerichteten, Schrägfläche des Fräskopfs im Zusammenwirken mit der Befestigung der Wendeplatte auf der Sitzfläche des Fräskopfs durch das Befestigungsmittel vorgesehen.

In einer zweiten Variante ist die Wendeplatte an den erstgenannten Flächen unter einem flachen Winkel von 2 bis 10° zu den Spanflächen hin gefast und an den Fasenflächen nachschleifbar und zur Anordnung auf einer Sitzfläche des Fräskopfs vorgesehen, die unter dem um den Fasenwinkel vergrößerten Freiwinkel schräggestellt ist.

Bei der ersten Variante ermöglicht die vorgesehene Abstützung das Nachschleifen der Wendeplatte auf den erstgenannten Flächen in Verbindung mit einem Nachschleifen an den Spanflächen: Sind beide möglichen Freiflächen, also auch die Auflagefläche der Wendeplatte, abgeschliffen, so wird die Auflagefläche wieder in Berührung mit der Sitzfläche des Werkzeugs gebracht, indem die möglichen Spanflächen in entsprechendem Maße abgeschliffen werden. Auf jeden Fall ist dann eine Berührung zwischen der unter der abgestützten möglichen Spanfläche liegenden Spanfläche und dem Werkzeug nicht mehr möglich.

Dem trägt die vorgesehene Abstützung Rechnung.

Bis zu dem Abschleifen könnte formschlüssiger Eingriff mit einer Abstützung an beiden möglichen Spanflächen bestehen.

Vorzugsweise ist der Wendeplatte jedoch ein Fräskopf zugeordnet, an dem sich von vornherein von der Schrägfläche bis zu der Sitzfläche ein Freiraum erstreckt und somit die vorgesehene Abstützung von Anfang an vorhanden ist. Diese Abstützung ist insofern grundsätzlich günstig, als sie die Schneidkraft ziemlich direkt aufnimmt und eine Scher- und/oder Biegebeanspruchung der Wendeplatte ausschließt. Sie ist daher bei den erfindungsgemäßen Wendeplatten allgemein bevorzugt, die wegen ihrer Einkerbung an den Spanflächen gegen derartige Beanspruchungen ggf. etwas empfindlich sind.

Unabhängig davon wird als weitere Ausgestaltung ein zwischen der Schrägfläche und der Sitzfläche ausgebildeter Freiraum vorgeschlagen, der um die dortige(n) Schneidkante(n) herumgeführt ist, so dass er an benutzten Schneidkanten etwa entstandene Grate aufnehmen kann und diese die Auflage der Wendeplatte nicht stören können.

Bei der zweiten Variante verbleibt zwischen den Fasen eine auf der Sitzfläche liegende Auflagefläche. Ein Nachschleifen der Spanflächen ist nicht notwendig. Die Platte könnte insofern an dem Werkzeug ein Widerlager erhalten, das in den Winkel zwischen den beiden dortigen möglichen Spanflächen greift. Sie kann aber auch an einem gleichen Werkzeug eingesetzt werden, wie es für die erste Variante zwingend und, wie gesagt, bevorzugt ist.

Im übrigen ragt die nachschleifbare Wendeplatte, wie schon angedeutet, etwa um die Dickenzugabe aus ihrem Sitz an dem Werkzeug heraus. Mit Rücksicht auf die Festigkeit der Wendeplatte sollte die Bohrung jeweils über einen Sitz für den Kopf des Befestigungsmittels in den beiden Bereichen der Dickenzugabe zylindrisch sein, d.h. keinen größeren Durchmesser als nötig haben.

Die erfindungsgemäßen Wendeplatten können insbesondere die Form eines Rechtecks oder eines Quadrates haben.

Die Zeichnungen geben Ausführungsbeispiele der Erfindung wieder.
- Fig. 1: zeigt eine Wendeplatte für einen Fräskopf in isometrischer Darstellung,
- Fig. 2: zeigt den zugehörigen Fräskopf in isometrischer Darstellung,
- Fig. 3: zeigt ausschnittweise einen Querschnitt durch den Fräskopf und die Wendeplatte,

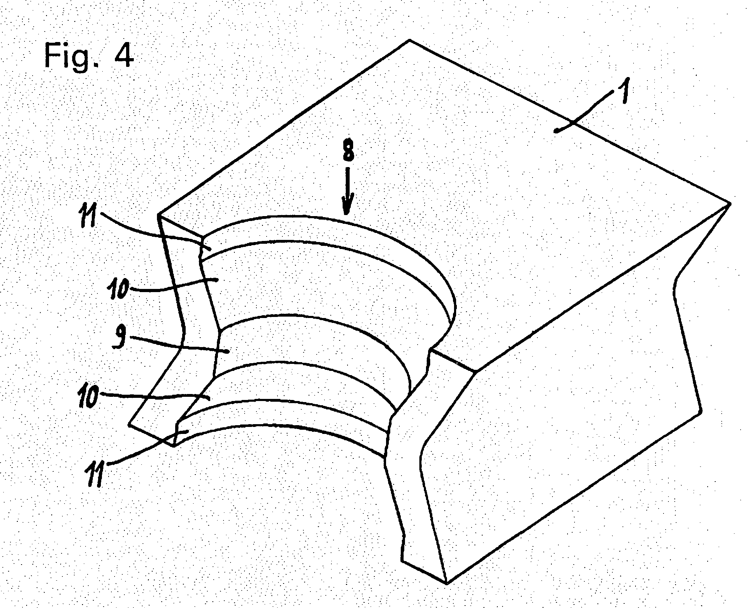

- Fig. 4: zeigt die Wendeplatte in einer etwa gleichen isometrischen Darstellung wie Fig. 1, in der Mitte quer durchgeschnitten,
- Fig. 5: zeigt eine zweite Wendeplatte in isometrischer Darstellung,
- Fig. 6: zeigt eine dritte Wendeplatte in isometrischer Darstellung,
- Fig. 7: zeigt eine fünfte Wendeplatte in einem Fig. 3 entsprechenden Querschnitt, und
- Fig. 8: zeigt eine sechste Wendeplatte in einem Fig. 3 entsprechenden Querschnitt.

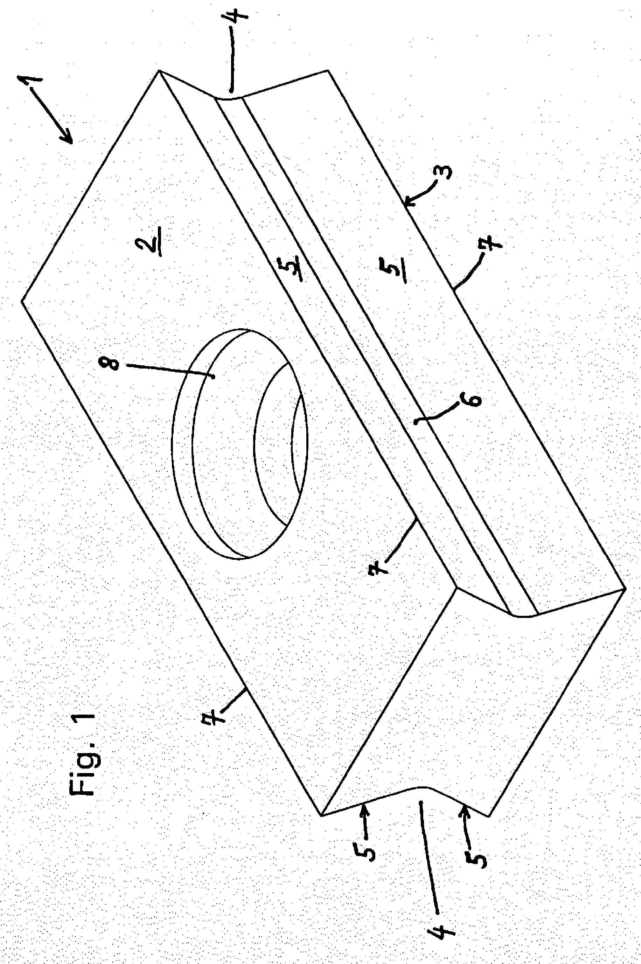

Die in Fig. 1 dargestellte (nicht zu beanspruchten Zusammenstellung oder zur beanspruchten Verwendung geeignete) Wendeplatte 1 ist rechteckig, d.h. sie hat eine quaderförmige Grundform. Die beiden Breitseiten sind bei der Benutzung als Freifläche 2 und Auflagefläche 3 und umgekehrt bestimmt. An den beiden Längsschmalseiten sind jeweils durch eine zur Mittelebene der Wendeplatte 1 symmetrische Einkehlung 4 von durchgehend gleichbleibendem Querschnitt zwei mögliche Spanflächen 5 gebildet mit einem ausgerundeten Übergang 6 dazwischen. Durch die Schnitte der ebenen Spanflächen 5 mit der Freifläche 2 und der Auflagefläche 3, die eine weitere mögliche Freifläche darstellt, ergeben sich vier geradlinige mögliche Schneidkanten 7.

Eine von der einen Breiteseite zur anderen durchgehende mittige Bohrung 8 weist beiderseits eines zylindrischen mittleren Abschnitts 9 zwei kegelförmige Sitze 10 für einen Schraubenkopf und darüber einen zylindrischen Abschnitt 11 auf.

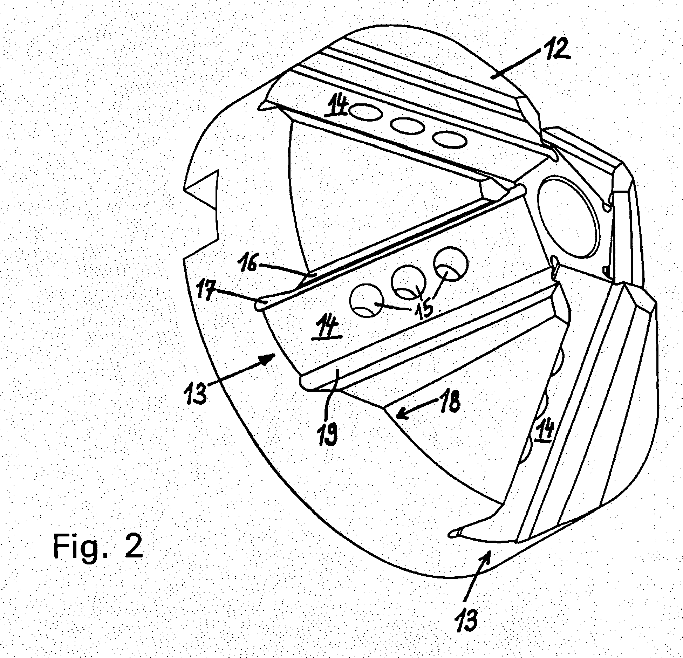

Fig. 2 lässt einen Fasenfräskopf 12 mit fünf Sitzen 13 für eine (nicht zu beanspruchten Zusammenstellung oder zur beanspruchten Verwendung geeignete) Wendeplatte 1 erkennen.

Die Sitze 13 umfassen jeweils eine Sitzfläche 14 für die Auflagefläche 3 der Wendeplatte, drei, wahlweise zu verwendende, Gewindebohrungen 15 für eine Schraube, mittels derer die Wendeplatte 1 unter Verwendung der Bohrung 8 auf dem Sitz 13 zu befestigen ist, sowie eine Schrägfläche 16, an der dabei die der aktuellen Spanfläche 5 an der Freifläche 2 gegenüberliegende (in Unterscheidung zu der in der Einkehlung 4 gegenüberliegenden) mögliche Spanfläche 5 zur Anlage kommt.

Die wendeplatte steht hier um ihre Dickenzugabe 35 aus dem Sitz 13 heraus.

Von der Schrägfläche 16 erstreckt sich entlang der anschließenden möglichen Spanfläche 5 und um deren Schneidkante 7 herum eine schmaler Freiraum 17.

Auf der anderen Seite liegt die Wendeplatte 1 an einem Rücksprung 18 und einem Ausschnitt 19 des Fasenfräskopfs 12 frei.

Der Pfeil 20 verdeutlicht die Bewegungsrichtung, der gestrichelte Pfeil 21 die Spanung durch die Schneidkante 7 und den Abfluss der Späne über die Spanflächen 5.

Die Wendemöglichkeiten sind aus den Darstellungen von selbst ersichtlich.

Zusätzlich können, nachdem alle vier Schneidkanten 7 abgenutzt sind, die Schneidkanten 7 nachgeschliffen werden.

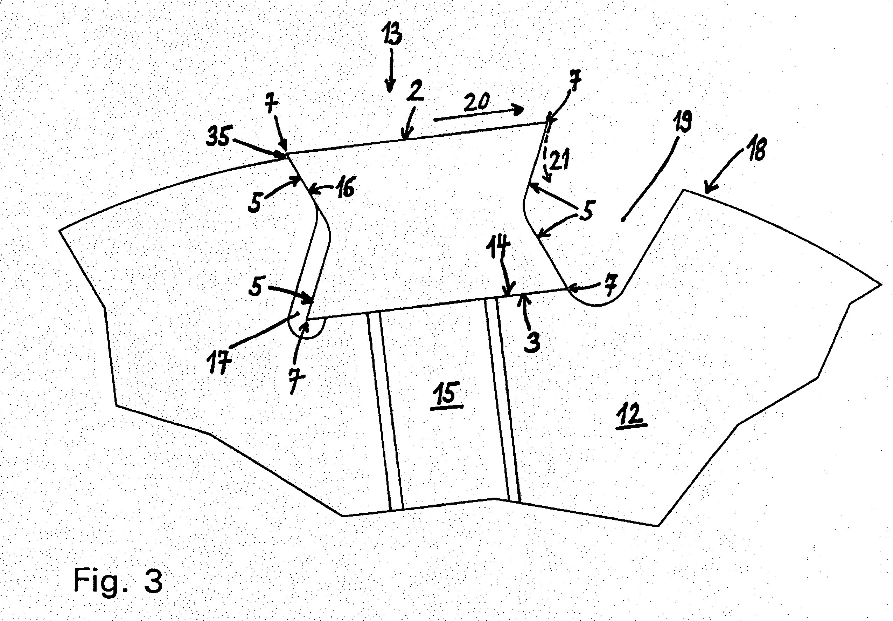

Werden zu diesem Zweck die beiden Breitseiten der Wendeplatte 1 abgeschliffen, was zur Schärfung der Schneidkanten an sich genügen würde, so müssen auch die Einkehlungen 4 um so viel nachgeschliffen werden, dass die Auflagefläche 3 der Wendeplatte 1 die Sitzfläche 14 des Fasenfräskopfes 12 berührt. Die in Fig. 3 links oben herausragende Schneidkante 7 rutscht damit tiefer.

Die Höhe der zylindrischen Abschnitte 11 der Bohrung 18 stellt die zum Abschleifen zur Verfügung gestellte Materialzugabe an der Wendeplatte 1 dar.

Die vier Kanten an den Enden der beiden Breitseiten könnten gefast oder abgerundet sein, um ein volles Eindringen der Wendeplatte in das Material, wobei die scharfen Ecken stören würden und Verschleiß und Beschädigungsgefahr ausgesetzt wären, zu erleichtern. Das kommt besonders bei kürzeren, auf dem Fräskopf hintereinander angeordneten Wendeplatten in Betracht.

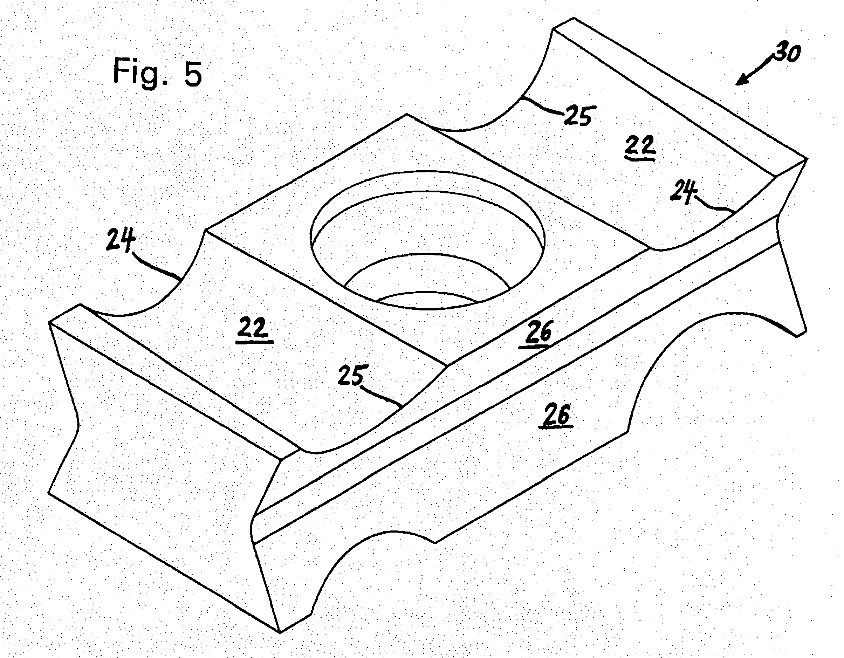

Die in Fig. 5 gezeigte (nicht zur beanspruchten Zusammenstellung oder zur beanspruchten Verwendung geeignete) Wendeplatte 21 hat ebenfalls eine rechteckige bzw. quaderförmige Grundform. Sie unterscheidet sich von der Wendeplatte 1 durch an ihren möglichen Freiflächen eingeformte flache Mulden 22, die sich in dem Beispiel über die Breite der Freifläche erstrecken und mit ihren Ausmündungen an den möglichen Spanflächen jeweils eine eingebuchtete Schneidkante von einem Viertelkreis erzeugen. Die Einbuchtungen sind mit 24 und 25 bezeichnet; mit Rücksicht auf die Abführung der Späne wird die kleinere Einbuchtung 24 bevorzugt als die Schneidkante benutzt. Die Spiegelsymmetrie der, mit 26 bezeichneten, Spanflächen ist im übrigen erhalten geblieben.

Diese Gestaltung einer Wendeplatte ist, für sich genommen, neu.

Mit den Einbuchtungen 24 und 25 wird der Schneidkante eine Form verliehen, die Kanten zu verrunden erlaubt. Hierfür wird nur mit der eingebuchteten Schneidkante geschnitten.

Eine andere (nicht von der beanspruchten Verwendung umfasste) Nutzungsmöglichkeit der Wendeplatte ist, nur mit den geradlinigen Schneidkanten zwischen den und/oder jenseits der Einbuchtungen zu schneiden und mit der Einbuchtung nicht. Dadurch wird trotz großer und entsprechend gut abgestützter Schneidplatte nur mit einer kürzeren Schneidkante geschnitten. Die Schneidkante kann dadurch mit weniger Kraftausübung in das Material eindringen. Das an den Einbuchtungen stehen gebliebene Material kann dann durch eine nachfolgende Schneidplatte abgetragen werden, deren Schneidkante dabei wiederum nur auf einer kürzeren Länge wirksam wird.

Eine dritte (nicht von der beanspruchten Verwendung umfasste) Nutzungsmöglichkeit besteht darin, mit der Schneidkante auf voller Länge zu arbeiten, d.h. auf den geradlinigen und auf den eingebuchteten Abschnitten und so ein Zierrelief zu erzeugen.

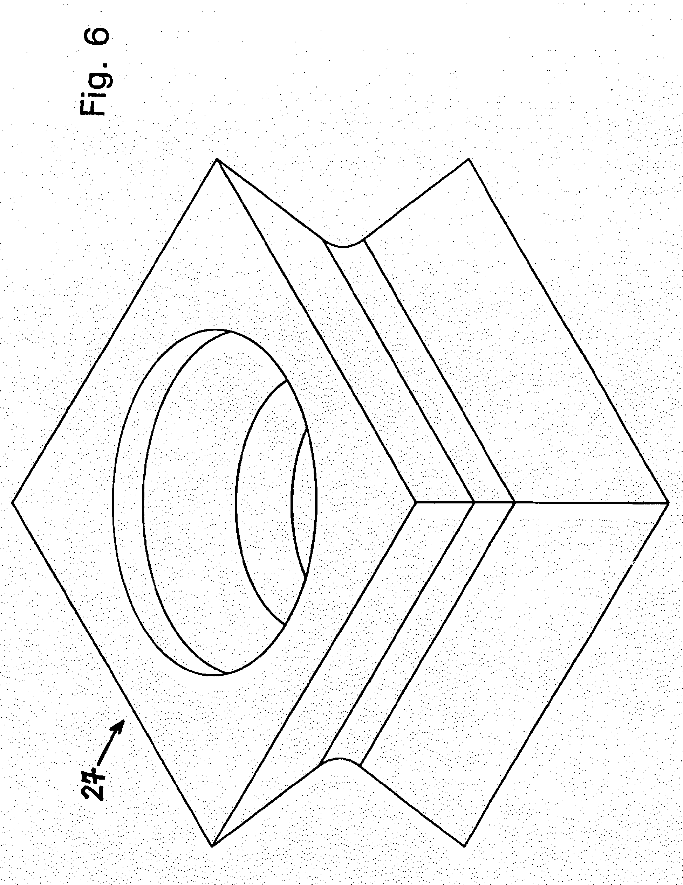

Die (nicht zu beanspruchten Zusammenstellung oder zur beanspruchten Verwendung geeignete) Wendeplatte 27 nach Fig. 6 ist quadratisch. Sie bietet also acht Schneidkanten. Es gilt Entsprechendes wie vorstehend erläutert.

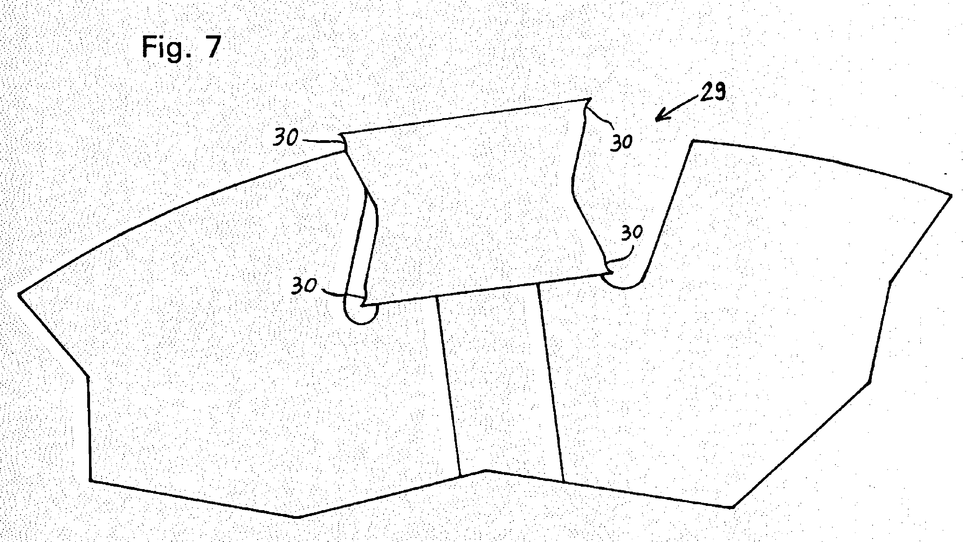

Fig. 7 lässt eine im ganzen gleiche (nicht zu beanspruchten Zusammenstellung oder zur beanspruchten Verwendung geeignete) Wendeplatte 29 wie in Fig. 3 erkennen, bei der jedoch unter den Schneidkanten jeweils eine schmale Kehlnut 30 eingeformt ist.

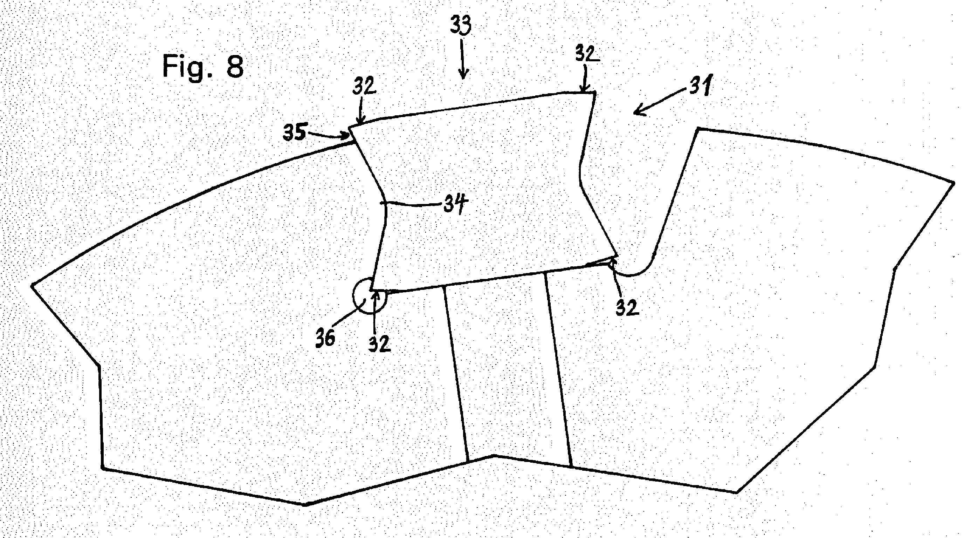

Fig. 8 zeigt als die oben erwähnte zweite Variante eine (nicht zu beanspruchten Zusammenstellung oder zur beanspruchten Verwendung geeignete) Wendeplatte 3 mit flachen Fasen 32 an der Freifläche und der Auflagefläche. Sie hat in dem zugehörigen Werkzeug einen Sitz 33 mit einem zu der, hier ebenfalls vorhandenen, Einkehfung 4 komplementären, gegen die Schneidkraft abstützenden Widerlager 34.

Ein um die mögliche Schneidkante herumgeführter Freiraum 36 ist auch hier eingerichtet. Der Fasenwinkel beträgt beispielsweise 5° und der Freiwinkel beträgt z.B. an der Fase 3° und an der übrigen Freifläche 8°.

Der Plattensitz in dem Werkzeug ist vorzugsweise zur Drehachse des Werkzeugs derart ausgerichtet, dass die Schneidkante schräg und scherend in das Material eingreift und einen kurzen "Komma-Span" erzeugt.

Die erfindungsgemäßen Verwendung und Zusammenstellung sind vorgesehen zum Anfasen von Kanten im weitesten Sinne unter Winkeln von 0 bis 85° mittels walzenförmiger oder kegelförmiger Fräsköpfe. In Betracht stehen das Anarbeiten von Kantenverrundungen an gerade verlaufenden Kanten und Konturen von Werkstücken aus Aluminium(legierungen), Stahl und anderen höherfesten Werkstoffen.

Nachgeschliffene Wendeplatten erhalten in der Regel die gleichen Nachbehandlungen an den Kanten wie bei der Herstellung, so dass sie dann neuwertig sind. Zu diesen Nachbehandlungen gehören das Nachschleifen der erwähnten schmalen Kehlnuten oder schmalen Fasen an den Spanflächen und/oder Freiflächen, desgleichen Verrundungen der Schneidkanten zur Entfernung der größten Schärfe sowie die Erneuerung einer ggf. vorhandenen Beschichtung, z.B. aus Titannitrid.

## Patentansprüche

1. Verwendung einer zum Fasen geeigneten Wendeplatte (21), die mit Schneidkanten und einer Bohrung von der Freifläche zur Auflagefläche der Wendeplatte für den Durchtritt eines einen Kopf aufweisenden Befestigungsmittels und Wendemöglichkeit durch Verdrehen der Wendeplatte (21) um die Achse der Bohrung versehen ist und an der Freifläche eingeformte flache Mulden (22) aufweist, welche mit Ausmündungen an Spanflächen (26) jeweils eine eingebuchtete Schneidkante (24; 25) erzeugen, **dadurch gekennzeichnet, dass** die Schneidkanten geschliffen sind, und dass die Verwendung zur Verrundung von Kanten eines Werkstücks nur durch Schneiden mit einer der eingebuchteten Schneidkanten mittels eines konischen oder zylindrischen Fräskopfes durchgeführt wird.

2. Zusammenstellung eines konischen oder zylindrischen Fräskopfs (12) und einer Wendeplatte zum Fasen, wobei die Wendeplatte (21) mit Schneidkanten und einer Bohrung von der Freifläche zur Auflagefläche der Wendeplatte (21) für den Durchtritt eines einen Kopf aufweisenden Befestigungsmittels versehen ist und eine Wendemöglichkeit durch Verdrehen der Wendeplatte um die Achse der Bohrung vorgesehen ist, wobei die Wendeplatte (21) an der Freifläche eingeformte flache Mulden (22) aufweist, die in gegenüberliegende Spanflächen (26) der Wendeplatte (21) ausmünden,
wobei dass die Mulden (22) in der Freifläche in einer derartigen Form gebildet sind, dass Ausmündungen der Mulden (22) in den Spanflächen (26) eingebuchtete Schneidkanten (24;25) erzeugen, **dadurch gekennzeichnet, dass** die Schneidkanten geschliffen sind, und dass die Wendeplatte (21) auf einer Sitzfläche des Fräskopfs (12) derart angeordnet ist, dass bei Betrieb des Fräskopfs (12) nur durch Schneiden mit einer der eingebuchteten Schneidkanten (24;25) Kanten eines Werkstücks verrundbar sind.

3. Zusammenstellung nach Anspruch 2,
**dadurch gekennzeichnet,**
**dass** die beiden durch dieselbe Mulde (22) erzeugten, eingebuchteten Schneidkanten (24,25) an den Spanflächen (26) unterschiedlich groß sind.

4. Zusammenstellung nach einem der Ansprüche 2 oder 3,
**dadurch gekennzeichnet,**
**dass** die Breite der Mulde (22) von der einen zur anderen möglichen Spanfläche (26) zu- oder abnimmt.

5. Zusammenstellung nach einem der Ansprüche 2 bis 4,
**dadurch gekennzeichnet,**
**dass** die Mulde (22) an den Spanflächen (26) jeweils eine eingebuchtete Schneidkante (24,25) von einem Viertelkreis erzeugt.

6. Zusammenstellung nach einem der Ansprüche 2 bis 5,
**dadurch gekennzeichnet,**
**dass** zwei zueinander parallele Mulden (22) vorgesehen sind.

7. Zusammenstellung nach einem der Ansprüche 2 bis 6,
**dadurch gekennzeichnet,**
**dass** sie an denjenigen Seiten, die die möglichen Spanflächen (5) aufweisen, eine die betreffenden beiden Spanflächen (5) bildende Einkehlung (4) aufweist, die, abgesehen von etwaigen Ein- und/oder Ausbiegungen (24;25) ihrer die Schneidkanten (7) bildenden Ränder, einen durchgehend gleichbleibenden und zu der die Bohrung (8) schneidenden Mittelebene der Wendeplatte (1) spiegelbildlichen Querschnitt hat.

8. Zusammenstellung nach Anspruch 7,
**dadurch gekennzeichnet,**
**dass** die betreffenden beiden Spanflächen (5) eben sind und vorzugsweise in einem Winkel von 80 bis 160° zueinander stehen.

9. Zusammenstellung nach einem der Ansprüche 2 bis 8,
**dadurch gekennzeichnet,**
**dass** eine der jeweils benutzten Spanfläche (5) an der Freifläche (2) gegenüberliegende mögliche Spanfläche (5) zur alleinigen Abstützung der Wendeplatte gegen die Schneidkraft an einer, vorzugsweise gleich ausgerichteten, Schrägfläche (16) des Fräskopfs (12) im Zusammenwirken mit der Befestigung der Wendeplatte auf der Sitzfläche (14) des Fräskopfs durch das Befestigungsmittel vorgesehen ist.

10. Zusammenstellung nach einem der Ansprüche 2 bis 9,
**dadurch gekennzeichnet,**
**dass** die Wendeplatte an ebenen und/oder konkaven Spanflächen gebildete Schneidkanten aufweist, wobei der Keilwinkel der an den ebenen Spanflächen gebildeten Schneidkanten 40 bis 75° beträgt und der Keilwinkel der an den konkaven Spanflächen gebildeten Schneidkanten 10 bis 60° beträgt.

11. Zusammenstellung nach Anspruch 10,
**dadurch gekennzeichnet,**
**dass** die Wendeplatte zur Anordnung auf einer Sitzfläche des Fräskopfes vorgesehen ist, auf der ihr wirksamer Spanwinkel bei ebenen Spanflächen 6 bis 47° und bei konkaven Spanflächen 15 bis 75° und ihr Freiwinkel 2 bis 25° beträgt.

12. Zusammenstellung nach Anspruch 10 oder 11,
**dadurch gekennzeichnet,**
**dass** die Wendeplatte zufolge einer die erstgenannten Flächen über den Kopf des vorgesehenen Befestigungsmittels anhebenden Dickenzugabe (35), mit der die Dicke der Wendeplatte die Tiefe des vorgesehenen Sitzes der Wendeplatte an dem Werkzeug übersteigt, zur Schärfung der Schneidkanten, vorzugsweise an den erstgenannten Flächen und den Spanflächen, nachschleifbar ist.

## Claims

1. Use of an indexable insert (21) suitable for chamfering, which is provided with cutting edges and a bore from the flank to the bearing surface of the indexable insert for the passage of a fastening means having a head, and with a possibility of turning by rotating the indexable insert (21) about the axis of the bore, and has shallow hollows (22) formed in the flank, said hollows (22) producing in each case an indented cutting edge (24; 25) with outlets at rake faces (26), **characterized in that** the cutting edges are ground, and **in that** the use is carried out for rounding edges of a workpiece only by lips with one of the indented cutting edges by means of a conical or cylindrical milling head.

2. Assembly of a conical or cylindrical milling head (12) and an indexable insert for chamfering, wherein the indexable insert (21) is provided with cutting edges and with a bore from the flank to the bearing surface of the indexable insert (21) for the passage of a fastening means having a head, and a possibility of turning by rotating the indexable insert about the axis of the bore is provided, wherein the indexable insert (21) has shallow hollows (22) formed in the flank, said hollows (22) leading into opposite rake faces (26) of the indexable insert (21), wherein the hollows (22) in the flank are formed with such a shape that outlets of the hollows (22) in the rake faces (26) produce indented cutting edges (24; 25), **characterized in that** the indexable insert (21) is arranged on a seating surface of the milling head (12) such that during operation of the milling head (12) edges of a workpiece are roundable only by lips with one of the indented cutting edges (24; 25).

3. Assembly according to Claim 2, **characterized in that** the two indented cutting edges (24, 25), produced by the same hollow (22), at the rake faces (26) are different sizes.

4. Assembly according to either of Claims 2 and 3, **characterized in that** the width of the hollow (22) increases or decreases from one possible rake face (26) to the other.

5. Assembly according to one of Claims 2 to 4, **characterized in that** the hollow (22) produces in each case an indented cutting edge (24, 25) from a quarter circle at the rake faces (26).

6. Assembly according to one of Claims 2 to 5, **characterized in that** two mutually parallel hollows (22) are provided.

7. Assembly according to one of Claims 2 to 6, **characterized in that** it has, on those sides that have the possible rake faces (5), a groove (4) which forms the two rake faces (5) in question and, apart from any inwardly and/or outwardly curved areas (24; 25) of its rims that form the cutting edges (7), has a continuously constant cross section which is mirror-inverted with respect to the centre plane, intersecting the bore (8), of the indexable insert (1).

8. Assembly according to Claim 7, **characterized in that** the two rake faces (5) in question are planar and are preferably at an angle of 80 to 160° to one another.

9. Assembly according to one of Claims 2 to 8, **characterized in that** a possible rake face (5) located opposite the rake face (5), used in each case, at the flank (2) is provided for the sole support of the indexable insert against the cutting force of a, preferably identically oriented, inclined surface (16) of the milling head (12) in conjunction with the fastening of the indexable insert on the seating surface (14) of the milling head by way of the fastening means.

10. Assembly according to one of Claims 2 to 9, **characterized in that** the indexable insert has cutting edges formed at planar and/or concave rake faces, wherein the wedge angle of the cutting edges formed on the planar rake faces is 40 to 75° and the wedge angle of the cutting edges formed on the concave rake faces is 10 to 60°.

11. Assembly according to Claim 10, **characterized in that** the indexable insert is provided to be arranged on a seating surface of the milling head, on which seating surface the effective rake angle of said indexable insert is 6 to 47° in the case of planar rake faces and 15 to 75° in the case of concave rake faces and the clearance angle of said indexable insert is 2 to 25°.

12. Assembly according to Claim 10 or 11, **characterized in that**, on account of an additional thickness (35) which raises the flank and bearing surface over the head of the provided fastening means and by way of which the thickness of the indexable insert exceeds the depth of the provided seat of the indexable insert on the tool, the indexable insert is regrindable in order to sharpen the cutting edges, preferably at the flank, bearing surface and rake faces.

## Revendications

1. Utilisation d'une plaquette réversible (21) appropriée au chanfreinage, pourvue de bords de coupe et d'un trou allant de la surface en dépouille vers la surface d'appui de la plaquette réversible pour le passage d'un moyen de fixation présentant une tête et présentant une possibilité de retournement par rotation de la plaquette réversible (21) autour de l'axe du trou et présentant des creux (22) plats moulés au niveau de la surface en dépouille, qui génèrent par des découpes au niveau de surfaces d'attaque (26) à chaque fois un bord de coupe (24 ; 25) échancré, **caractérisée en ce que** les bords de coupe sont affûtés et **en ce que** l'utilisation pour arrondir les bords d'une pièce usinée n'est réalisée que par coupe à l'aide d'un des bords de coupe échancrés au moyen d'une tête de fraisage conique ou cylindrique.

2. Assemblage d'une tête de fraisage (12) conique ou cylindrique et d'une plaquette réversible servant au chanfreinage, la plaquette réversible (21) étant pourvue de bords de coupe et d'un trou allant de la surface en dépouille vers la surface d'appui de la plaquette réversible (21) pour le passage d'un moyen de fixation présentant une tête et présentant une possibilité de retournement par rotation de la plaquette réversible autour de l'axe du trou, la plaquette réversible (21) présentant des creux (22) plats moulés au niveau de la surface en dépouille, qui débouchent dans des surfaces d'attaque (26) opposées de la plaquette réversible (21), les creux (22) étant réalisés, dans la surface en dépouille, avec une forme telle que les découpes des creux (22) forment des bords de coupe (24 ; 25) échancrés dans les surfaces d'attaque (26), **caractérisé en ce que** les bords de coupe sont affûtés et **en ce que** la plaquette réversible (21) est disposée sur une surface de siège de la tête de fraisage (12) de manière telle que lors du fonctionnement de la tête de fraisage (12), les bords d'une pièce usinée ne peuvent être arrondis que par coupe à l'aide d'un des bords de coupe (24 ; 25) échancrés.

3. Assemblage selon la revendication 2, **caractérisé en ce que** les deux bords de coupe (24 ; 25) échancrés, générés par le même creux (22) présentent une grandeur différente au niveau des surfaces d'attaque (26).

4. Assemblage selon l'une quelconque des revendications 2 ou 3, **caractérisé en ce que** la largeur des creux (22) augmente ou diminue de l'une vers d'autres surfaces d'attaque (26) éventuelles.

5. Assemblage selon l'une quelconque des revendications 2 à 4, **caractérisé en ce que** le creux (22) génère au niveau des surfaces d'attaque (26) à chaque fois un bord de coupe (24 ; 25) échancré d'un quart de cercle.

6. Assemblage selon l'une quelconque des revendications 2 à 5, **caractérisé en ce que** deux creux (22) parallèles l'un à l'autre sont prévus.

7. Assemblage selon l'une quelconque des revendications 2 à 6, **caractérisé en ce qu'**il présente, sur les faces qui présentent les surfaces d'attaque (5) éventuelles, une gorge (4) formant les deux surfaces d'attaque (5) concernées, qui, à l'exception d'éventuelles courbures vers l'intérieur et/ou vers l'extérieur (24 ; 25) de leurs bords formant les bords de coupe (7), présente une section continue qui reste la même et en miroir par rapport au plan central de la plaquette réversible (1) passant par le trou (8).

8. Assemblage selon la revendication 7, **caractérisé en ce que** les deux surfaces d'attaque (5) concernées sont planes et se trouvent de préférence dans un angle de 80 à 160° l'une par rapport à l'autre.

9. Assemblage selon l'une quelconque des revendications 2 à 8, **caractérisé en ce qu'**une surface d'attaque (5) éventuelle opposée à la surface d'attaque (5) à chaque fois utilisée sur la surface en dépouille (2) est prévue, pour l'appui unique de la plaquette réversible contre la force de coupe, sur une surface en biais (16), de préférence de même orientation, de la tête de fraisage (12) en interaction avec la fixation de la plaquette réversible sur la surface du siège (14) de la tête de fraisage par le moyen de fixation.

10. Assemblage selon l'une quelconque des revendications 2 à 9, **caractérisé en ce que** la plaquette réversible présente des bords de coupe formés sur des surfaces d'attaque planes et/ou concaves, l'angle de tranchant des bords de coupe formés sur les surfaces d'attaque planes valant 40 à 75° et l'angle de tranchant des bords de coupe formés sur les surfaces d'attaque concaves valant 10 à 60°.

11. Assemblage selon la revendication 10, **caractérisé en ce que** la plaquette réversible est prévue pour être disposée sur une surface de siège de la tête de fraisage, sur laquelle son angle de coupe actif, dans le cas de surfaces d'attaque planes, vaut 6 à 47° et, pour des surfaces d'attaque concaves, vaut 15 à 75° et son angle de dépouille vaut 2 à 25°.

12. Assemblage selon la revendication 10 ou 11, **caractérisé en ce que** la plaquette réversible, suite à un supplément d'épaisseur (35), élevant les premières surfaces mentionnées au-dessus de la tête du moyen de fixation prévu, par lequel l'épaisseur de la plaquette réversible dépasse la profondeur du siège prévu de la plaquette réversible sur l'outil, peut être post-affûtée pour acérer les bords de coupe, de préférence au niveau des premières surfaces mentionnées et des bords d'attaque.
